# EUROPEAN PATENT SPECIFICATION

(11) **EP 3 379 712 B1**
(45) Date of publication and mention of the grant of the patent: **29.07.2020**
(21) Application number: 15908738.6
(22) Date of filing: 18.11.2015
(51) Int. Cl.: H02M 7/06, H01H 47/04, H02M 1/36, H02M 7/12, B60L 3/00, H02M 1/32, H02M 5/458, B60L 1/00

(54) **POWER CONVERSION DEVICE**
STROMWANDLUNGSVORRICHTUNG
DISPOSITIF DE CONVERSION DE PUISSANCE

(43) Date of publication of application: 26.09.2018
(73) Proprietor: Hitachi Industrial Equipment Systems Co., Ltd., Tokyo 101-0022 (JP)
(72) Inventor: TANABE, Keisuke, Tokyo 101-0022 (JP); HOTTA, Kazushige, Tokyo 101-0022 (JP); TAKATA, Naoki, Tokyo 101-0022 (JP)
(74) Representative: MERH-IP Matias Erny Reichl Hoffmann Patentanwälte PartG mbB
(86) International application number: PCT/JP2015/082336
(87) International publication number: WO 2017/085798

(56) References cited:
- WO-A1-2015/159760
- JP-A- H0 530 746
- JP-A- H0 638 359
- JP-A- 2010 146 819
- JP-A- 2010 146 819
- JP-A- 2013 101 843
- JP-B1- 5 730 454
- JP-B1- 5 730 454
- US-A1- 2013 039 101

## Description

### TECHNICAL FIELD

The present invention relates to a power conversion device.

### BACKGROUND ART

As a background art of this technical field, there has been such an art shown in JP-A-2006-340532 (Patent Literature 1). In this publication, in view of the object that "to provide an inrush current prevention circuit capable of discriminating an abnormal state of a relay with an inexpensive circuit configuration and a power conversion device provided with such configured inrush current prevention circuit", there is described the solution for the object that "in the inrush current prevention circuit provided with a semiconductor rectifier element group 2 connected to an AC power supply 1, an inrush current prevention resistor 3 having one end connected to a positive output terminal of the semiconductor rectifier element group, a relay 4 connected in parallel to the inrush current prevention resistor 3, a smoothing capacitor 5 connected to another end of the inrush current prevention resistor 3, a DC bus voltage detecting section 6 for detecting voltage between each of terminals of the smoothing capacitor 5, a load current detecting section 8 for detecting current flowing in a load, and an arithmetic section 9 which receives signals of the DC bus voltage detecting section 6 and the load current detecting section 8, an operation failure in the relay is detected by comparison between a DC bus voltage value, calculated by a voltage value and an AC power supply system of the AC power supply, a power supply frequency, the capacity of the smoothing capacitor, and a voltage detecting section output signal and a load current detecting section output signal, and an output signal value of the DC bus voltage detecting section".
Patent publication WO 2015/159760 discloses a power conversion device with an inrush prevention resistor disposed in parallel with a relay on the current path between a converter and a smoothing capacitor, wherein the voltage across the smoothing capacitor is used to control the opening and closing of the relay.

### SUMMARY OF INVENTION

### TECHNICAL PROBLEM

In the above-described Patent Literature 1, in view of the object that the inrush current prevention circuit capable of discriminating the abnormal state of the relay with the inexpensive circuit configuration and the power conversion device provided with the inrush current prevention circuit, whether the relay circuit is operating normally or not is determined based on the voltage between the terminals of the smoothing capacitor.

Here, there have been conventionally used relays in which a contact voltage for causing contact operation of a relay after completion of charging of a smoothing capacitor has the same level as a holding voltage for holding the relay after the contact operation. However, in recent years, in order to make the size of the relay reduced, and in order to make the capacity thereof increased, there has been provided a relay that is configured to apply a large voltage when brought into contact and, thereafter for suppressing self-heating, for dropping voltage to secure the necessary holding force. Such a relay has advantages of being inexpensive and compact, but also has a disadvantage that the contact voltage should transit to the holding voltage. This has the disadvantage that a power supply abnormality occurs, and when the power supply has recovered from the abnormality, unless the relay is not operated after recognition of the recovery, resulting in contact failure.

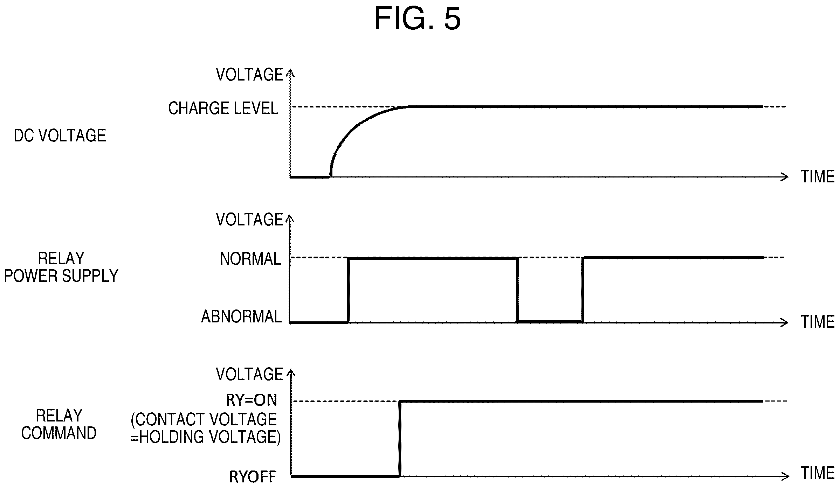

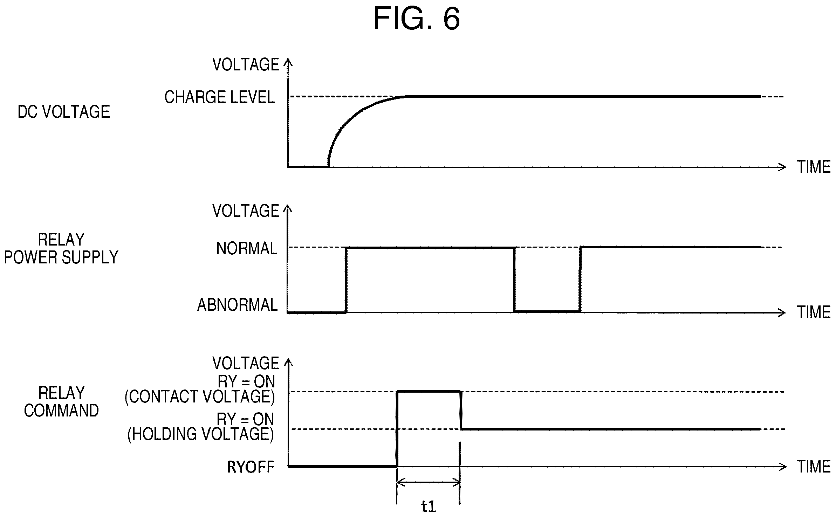

In an inrush prevention circuit which has been used conventionally, as shown in FIG. 5 for example, an ON command is executed to supply a contact voltage to a relay after a DC voltage to be received reaches a charge level. Since the contact voltage and a holding voltage have the same level, when the relay power supply is lost and restored after the ON command is executed, the ON command may be continued to the relay, and there has been no need to monitor the relay power supply and control the command to the relay. On the other hand, if this operation is applied to a relay requiring a transition from the contact voltage to the holding voltage, as shown in FIG. 6 for example, since the relay is to be brought into contact while maintaining the command of the holding voltage when the relay power supply is restored, there is a possibility of contact failure.

It is therefore an object of the present invention to safely use a relay that switches a voltage between a voltage at the time of contact and a voltage at the time of holding without bringing about contact failure in an inrush prevention circuit.

### SOLUTION TO PROBLEM

The present application includes a plurality of means for solving the above problem, but the following is an example thereof. A power conversion device is provided with a DC converting circuit that converts an AC voltage into a DC voltage, an inrush prevention circuit provided with a resistor having one end connected to the DC converting circuit and a relay connected in parallel to the resistor, a DC smoother provided with a smoothing capacitor connected to another end of the resistor, and a controller that controls the inrush prevention circuit. In this power conversion device, based on voltage information of a power supply that operates the relay and voltage information between the smoothing capacitor, the controller decides whether a contact voltage or a holding voltage smaller than the contact voltage is applied to the relay.

### ADVANTAGEOUS EFFECTS OF INVENTION

According to the present invention, it is possible to safely use the relay that switches the voltage between the voltage at the time of contact and the voltage at the time of holding in the inrush prevention circuit.

The problems, configurations, and effects other than those described above will be clarified from the description of the embodiments below.

### BRIEF DESCRIPTION OF DRAWINGS

FIG. 1 is an example of a configuration diagram of a power conversion device.
FIG. 2 is an example of a state transition diagram of an inrush prevention circuit.
FIG. 3 is an example of a time chart of an inrush prevention circuit that detects a transition from an abnormal state of a relay power supply to a normal state in Embodiment 1 and executes an initial operation.
FIG. 4 is an example of a time chart of an inrush prevention circuit that detects a transition from an abnormal state of a DC voltage applied to a smoothing capacitor to a normal state in Embodiment 2 and executes an initial operation.
FIG. 5 is an example of a conventional inrush prevention circuit operation.
FIG. 6 is an example of an operation when a relay requiring a transition between a contact voltage and a holding voltage is applied to the conventional inrush prevention circuit.

### DESCRIPTION OF EMBODIMENTS

Hereinafter, embodiments will be described with reference to the drawings.

### Embodiment 1

In the present embodiment, an operation example of a system incorporated in a power conversion device 100 will be described.

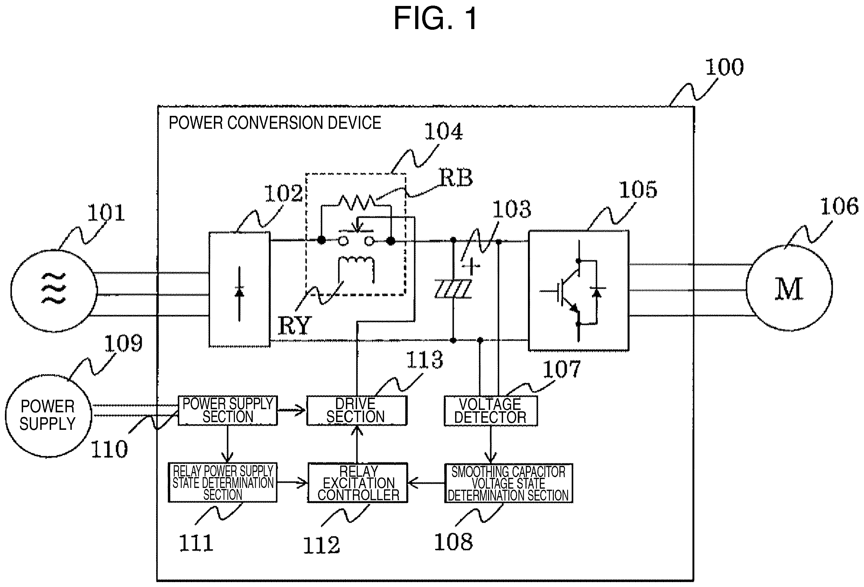

FIG. 1 is an example of a configuration diagram of the power conversion device 100 and an AC motor 106 according to the present embodiment.

The present embodiment has a three-phase AC power supply 101, a DC conversion unit 102, a DC smoother 103, an inrush prevention circuit 104, an AC converter 105, the AC motor 106, a voltage detector 107, a smoothing capacitor voltage state determination section 108, a power supply 109, a power supply section 110, a relay power supply state determination section 111, a relay excitation controller 112, and a drive section 113.

The three-phase AC power supply 101 is, for example, a three-phase AC voltage supplied from a power company or an AC voltage supplied from a generator, and outputs the AC voltage to the DC conversion unit 102. The three-phase AC power supply may be a single-phase AC power supply.

The DC conversion unit 102 is constituted of, for example, a DC conversioncircuit constituted of a diode or a DC converting circuit using an IGBT and a flywheel diode, converts the AC voltage input from the three-phase AC power supply 101 into a DC voltage, and outputs the DC voltage to the DC smoother 103. In FIG. 1, a DC conversion unit constituted of a diode is shown.

The DC smoother 103 is provided with a smoothing capacitor, smoothes the DC voltage input from the DC conversion unit 102, and outputs the DC voltage to the AC converter 105. For example, when an output of a generator is a DC voltage, the smoothing capacitor may receive the DC voltage directly from the generator without going through the DC conversion unit 102.

When the smoothing capacitor is charged, an initial charging current several times as large as that during steady energization flows. The inrush prevention circuit 104 is a circuit for suppressing the initial charging current, and is constituted of a resistor RB and a relay RY connected in parallel to the resistor RB.

The AC converter 105 is constituted of, for example, an AC converter circuit using an IGBT and a flywheel diode, converts DC power to AC power of an arbitrary frequency, and outputs the AC power to the AC motor 106.

The voltage detector 107 detects voltage information between the smoothing capacitor and outputs the detected voltage information to the smoothing capacitor voltage state determination section 108.

The smoothing capacitor voltage state determination section 108 takes the input as the voltage detector 107 and outputs a charging state to the smoothing capacitor to the relay excitation controller 112. Specifically, the smoothing capacitor voltage state determination section 108 determines whether or not a voltage between the smoothing capacitor has reached a predetermined level and is stabilized, thereby determines whether or not the smoothing capacitor is in a charging completed state, and subsequently outputs the determination result to the relay excitation controller 112.

The power supply 109 is, for example, a single-phase or three-phase AC voltage supplied from a power supply company, an AC voltage supplied from a generator, or a DC voltage supplied from a battery or a power supply device, and the power supply 109 outputs the voltage to the power supply section 110.

The power supply section 110 takes the input as the power supply 109, outputs a power supply for driving the relay RY to the drive section 113, and outputs power information output to the drive section 113 to the relay power supply state determination section 111.

The relay power supply state determination section 111 takes the input as the power supply section 110 and outputs to the relay excitation controller 112 whether a power supply for driving the relay RY is normal or abnormal. Specifically, the relay power supply state determination section 111 determines that the power supply is normal when the voltage of the power supply is equal to or greater than a predetermined value, alternatively determines that the power supply is abnormal when the voltage of the power supply is lower than the predetermined value, and outputs the determination result to the relay excitation controller 112.

The relay excitation controller 112 receives charging state information from the smoothing capacitor voltage state determination section 108 to the smoothing capacitor and power supply state information from the relay power supply state determination section 111 and outputs a control command of the relay RY to the drive section 113. The relay excitation controller 112 decides which voltage, either a contact voltage for initially operating the relay or a holding voltage smaller than the contact voltage, should be output as the control command of the relay RY.

The drive section 113 receives the power supply from the power supply section 110 and the control command of the relay RY from the relay excitation controller 112 and causes the relay RY to operate.

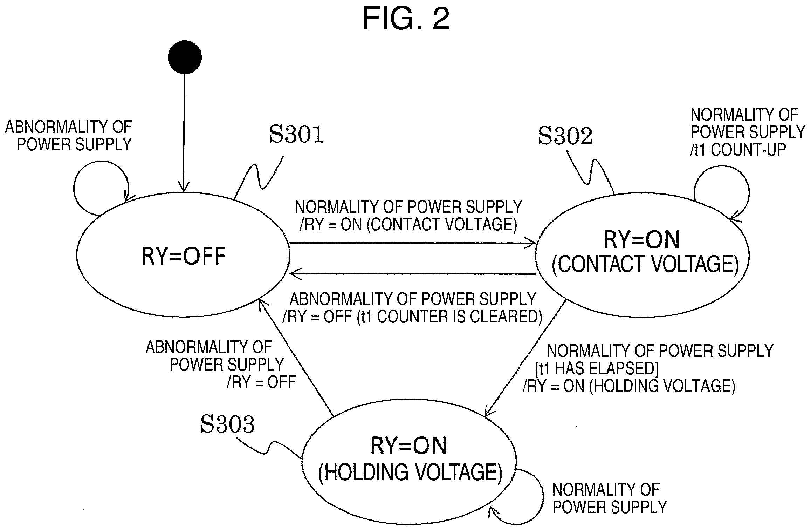

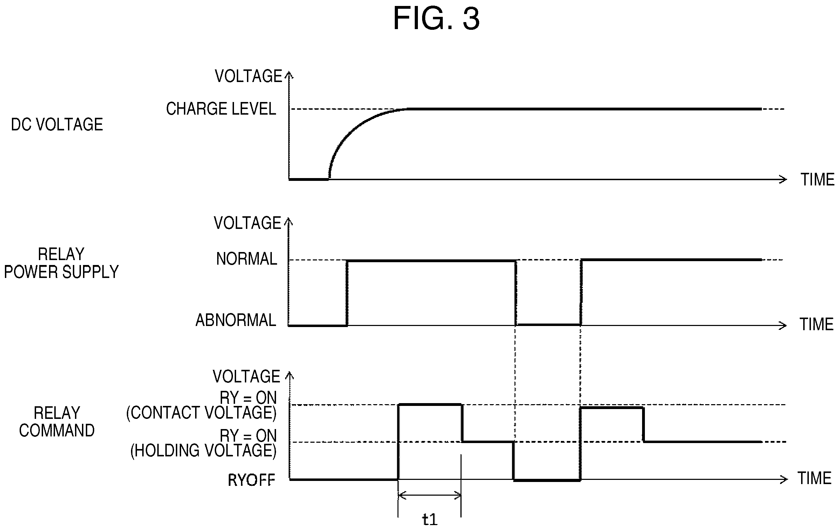

FIG. 2 shows a state transition diagram of the inrush prevention circuit in the present embodiment. FIG. 3 is an example of a time chart in a case where, when an abnormal state occurs in a relay power supply after operating the inrush prevention circuit and then transits to a normal state, an initial operation is performed according to the state transition diagram of FIG. 2. With reference to FIGS. 2 and 3, an example of the inrush prevention circuit that detects a transition from the abnormal state of the relay power supply to the normal state and executes the initial operation will be described.

In a state where power is not supplied (S301) to the relay, the power is supplied to a DC voltage to start charging operation. Simultaneously with this charging operation, the power is also supplied to the relay power supply. When the charging is completed and the normal state of the relay power supply is established, a command to supply the contact voltage to the RY is executed (S302). If the charging is not completed, or if the normal state of the relay is not established, the relay remains OFF (S301). Since it is necessary to give a time considering bounce of each relay for a command time t1 of the contact voltage, after the command time t1 has elapsed, the relay command is transited to the holding voltage (S303). If the charging is completed and the normal state of the relay power supply is established, the voltage remains at the holding voltage (S303). When there is an abnormality in the relay power supply, for example, the relay command is turned off (S301). If the relay can withstand an inrush current flowing due to a potential difference between a power supply voltage and the DC voltage and an impedance of a path when the power supply is restored, the relay needs not be turned off. Regarding the turning off of the relay, if the relay is turned off while current is flowing, a surge voltage may be generated, and elements may be destroyed. Therefore, it is necessary to shut off power supply to a load at the same time, for example. Thereafter, when the relay power supply transits to the normal state, the charging is completed, and the normal state of the relay power supply is established, whereby a contact voltage command is issued (S302). The normal state continues for the command time t1, whereby transition to the command of the holding voltage is performed (S303).

As described above, in the present embodiment, after the relay command is transited to the holding voltage, when the relay power supply is restored to the normal state after passing through the abnormal state, the relay excitation controller controls the drive section so as to apply the contact voltage to the relay instead of the holding voltage. This makes it possible to safely use the relay without causing contact failure.

### Embodiment 2

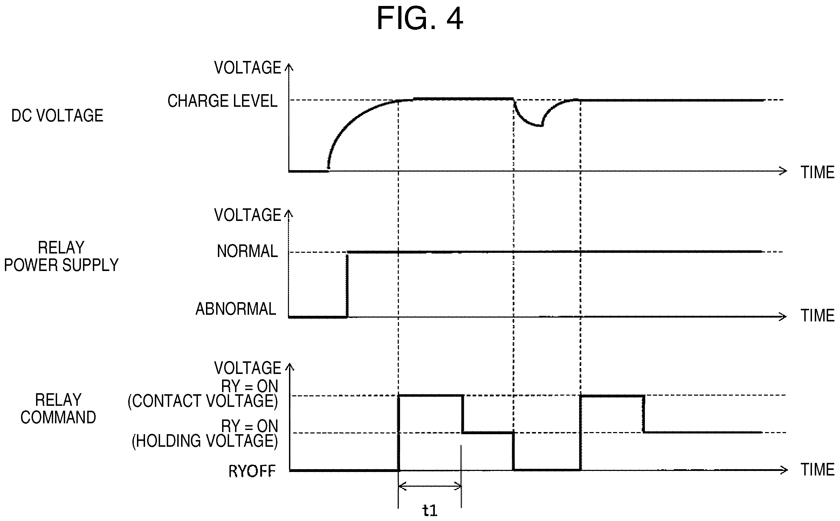

In Embodiment 1, the example of the inrush prevention circuit that detects the transition from the abnormal state of the relay power supply to the normal state and executes the initial operation has been described. In the present embodiment, a relay power supply maintains the normal state, and with reference to FIGS. 2 and 4, an example of an inrush prevention circuit that detects a transition from an abnormal state of a DC voltage applied to a smoothing capacitor to a normal state and executes an initial operation will be described.

In a state where power is not supplied (S301) to the relay, the power is supplied to a DC voltage to start charging operation. Simultaneously with this charging operation, the power is also supplied to the relay power supply. When the charging is completed and the normal state of the relay power supply is established, a command to supply the contact voltage to the RY is executed (S302). If the charging is not completed, or if the normal state of the relay is not established, the relay remains OFF (S301). Since it is necessary to give a time considering bounce of each relay for a command time t1 of the contact voltage, after the command time t1 has elapsed, the relay command is transited to the holding voltage (S303). If the charging is completed and the normal state of the relay power supply is established, the voltage remains at the holding voltage (S303). When the DC voltage drops due to loss of the power supply, that is, when the smoothing capacitor transits to a state where the smoothing capacitor is not in a charging completed state, for example, the relay command is turned off (S301). If the relay can withstand an inrush current flowing due to a potential difference between a power supply voltage and the DC voltage and an impedance of a path when the power supply is restored, the relay needs not be turned off. Regarding the turning off of the relay, if the relay is turned off while current is flowing, a surge voltage may be generated, and elements may be destroyed. Therefore, it is necessary to shut off power supply to a load at the same time, for example. Thereafter, when the DC voltage has reached a predetermined level to perform a transition to the charging completed state, the charging is completed, and the normal state of the relay power supply is established, whereby a contact voltage command is issued (S302). The normal state continues for the command time t1, whereby transition to the command of the holding voltage is performed (S303).

As described above, in the present embodiment, after the relay command is transited to the holding voltage, when the smoothing capacitor is restored to the charging completed state after passing through the drop of the DC voltage, the relay excitation controller controls the drive section so as to apply the contact voltage to the relay instead of the holding voltage. This makes it possible to safely use the relay without causing contact failure.

The present invention is not limited to the above-described embodiments, but includes various modifications. For example, the above-described embodiments have been described in detail in order to facilitate understanding the present invention, and the embodiments are not necessarily limited to including all configurations described. In addition, the configuration of a certain embodiment can be partially replaced by the configuration of a different embodiment, and the configuration of a certain embodiment can be added to the configuration of a different embodiment. In addition, a portion of the configuration of each embodiment can be subjected to addition, deletion, and replacement of a different configuration.

In addition, each configuration, function, processing unit, processing means, and the like described above may be, partially or fully, implemented by hardware, for example, by designing it using an integrated circuit and the like. In addition, the configurations, functions, and the like described above may be realized by software by interpreting and executing programs for implementing the respective functions by a processor. Information such as programs, tables, and files for implementing the functions may be stored in storage devices, such as a memory, a hard disk, and a solid state drive (SSD), or storage media such as an IC card, an SD card, and a DVD.

In addition, the illustrated control lines and information lines are those considered to be needed for the description but are not necessarily represent all the control lines and information lines required in a product. It may be deemed that almost all the components are actually interconnected.

### REFERENCE SIGNS LIST

100 ... Power conversion device, 101 ... Three-phase AC power supply, 102 ... DC conversion unit, 103 ... DC smoother, 104 ... Inrush prevention circuit, 105 ... AC converter, 106 ... AC motor, 107 ... Voltage detector, 108 ... Smoothing capacitor voltage state determination section, 109 ... Power supply, 110 ... Power supply section, 111 ... Relay power supply state determination section, 112 ... Relay excitation controller, 113 ... Drive section

## Claims

1. A power conversion device (100) comprising:
a DC converting circuit that converts an AC voltage into a DC voltage;
an inrush prevention circuit (104) comprising a resistor having one end connected to the DC converting circuit and a relay connected in parallel to the resistor;
a DC smoother (103) comprising a smoothing capacitor connected to another end of the resistor; and
a controller that controls the inrush prevention circuit (104), **characterized in that**, based on voltage information of a power supply (109) that operates the relay and voltage information of the smoothing capacitor, the controller decides whether a contact voltage or a holding voltage smaller than the contact voltage is applied to the relay.

2. The power conversion device (100) according to claim 1,
wherein the controller comprises
a relay power supply state determination section (111) that determines, from the voltage information of the power supply (109) that operates the relay, whether a state of the power supply is a normal state or an abnormal state,
a smoothing capacitor voltage state determination section (108) that determines, from the voltage information of the smoothing capacitor, whether or not the smoothing capacitor is in a charging completed state, and
a relay excitation controller (112) that decides, based on a determination result of the relay power supply state determination section (111) and a determination result of the smoothing capacitor voltage state determination section (108), whether the contact voltage or the holding voltage is applied to the relay.

3. The power conversion device (100) according to claim 2,
wherein when it is determined that the state of the power supply is the normal state, and when it is determined that the smoothing capacitor is in the charging completed state, the relay excitation controller (112) applies the contact voltage to the relay and then transits the voltage to the holding voltage, and
thereafter, after it is determined that the state of the power supply is the abnormal state, when the state of the power supply transits to the normal state, the relay excitation controller (112) applies the contact voltage to the relay.

4. The power conversion device according to claim 2,
wherein when it is determined that the state of the power supply is the normal state, and when it is determined that the smoothing capacitor is in the charging completed state, the relay excitation controller (112) applies the contact voltage to the relay and then transits the voltage to the holding voltage, and
thereafter, after it is determined that the smoothing capacitor is not in the charging completed state, when the smoothing capacitor transits to the charging completed state, the relay excitation controller (112) applies the contact voltage to the relay.

## Patentansprüche

1. Leistungsumsetzungsvorrichtung (100), die Folgendes umfasst:
eine Gleichstromumsetzungsschaltung, die eine Wechselspannung in eine Gleichspannung umsetzt;
eine Schaltung (104) zum Verhindern von Einschaltspitzen, die einen Widerstand umfasst, der ein Ende, das mit der Gleichstromumsetzungsschaltung verbunden ist, und ein Relais, das zum Widerstand parallel geschaltet ist, aufweist;
eine Gleichstromglättungseinrichtung (103), die einen Glättungskondensator umfasst, der mit einem weiteren Ende des Widerstands verbunden ist; und
eine Steuereinrichtung, die die Schaltung (104) zum Verhindern von Einschaltspitzen steuert,
**dadurch gekennzeichnet, dass** die Steuereinrichtung auf der Grundlage von Spannungsinformationen einer Stromversorgung (109), die das Relais betreibt, und von Spannungsinformationen des Glättungskondensators entscheidet, ob eine Kontaktspannung oder eine Haltespannung, die kleiner als die Kontaktspannung ist, an das Relais angelegt wird.

2. Leistungsumsetzungsvorrichtung (100) nach Anspruch 1,
wobei die Steuereinrichtung Folgendes umfasst:
einen Abschnitt (111) zur Bestimmung eines Zustands der Stromversorgung des Relais, der aus den Spannungsinformationen der Stromversorgung (109), die das Relais betreibt, bestimmt, ob ein Zustand der Stromversorgung ein Normalzustand oder ein abweichender Zustand ist;
einen Abschnitt (108) zur Bestimmung eines Spannungszustands des Glättungskondensators, der aus den Spannungsinformationen des Glättungskondensators bestimmt, ob sich der Glättungskondensator in einem vollständig aufgeladenen Zustand befindet; und
eine Relais-Anregungssteuereinrichtung (112), die auf der Grundlage eines Bestimmungsergebnisses des Abschnitts (111) zur Bestimmung eines Zustands der Stromversorgung des Relais und eines Bestimmungsergebnisses des Abschnitts (108) zur Bestimmung eines Spannungszustands des Glättungskondensators entscheidet, ob die Kontaktspannung oder die Haltespannung an das Relais angelegt wird.

3. Leistungsumsetzungsvorrichtung (100) nach Anspruch 2,
wobei dann, wenn bestimmt wird, dass der Zustand der Stromversorgung der Normalzustand ist, und wenn bestimmt wird, dass sich der Glättungskondensator im vollständig aufgeladenen Zustand befindet, die Relais-Anregungssteuereinrichtung (112) die Kontaktspannung an das Relais anlegt und anschließend die Spannung auf die Haltespannung überführt, und
daraufhin, nachdem bestimmt worden ist, dass der Zustand der Stromversorgung der abweichende Zustand ist, die Relais-Anregungssteuereinrichtung (112) die Kontaktspannung an das Relais anlegt, wenn der Zustand der Stromversorgung in den Normalzustand übergeht.

4. Leistungsumsetzungsvorrichtung nach Anspruch 2,
wobei dann, wenn bestimmt wird, dass der Zustand der Stromversorgung der Normalzustand ist, und wenn bestimmt wird, dass sich der Glättungskondensator im vollständig aufgeladenen Zustand befindet, die Relais-Anregungssteuereinrichtung (112) die Kontaktspannung an das Relais anlegt und anschließend die Spannung in die Haltespannung überführt, und
daraufhin, nachdem bestimmt worden ist, dass sich der Glättungskondensator nicht im vollständig aufgeladenen Zustand befindet, die Relais-Anregungssteuereinrichtung (112) die Kontaktspannung an das Relais anlegt, wenn der Glättungskondensator in den vollständig aufgeladenen Zustand übergeht.

## Revendications

1. Dispositif de conversion puissance (100) comprenant :
un circuit de conversion en courant continu (CC) qui convertit une tension en courant alternatif (CA) en une tension en CC ;
un circuit de prévention de démarrage (104) comprenant une résistance ayant une extrémité connectée au circuit de conversion en CC et un relais connecté en parallèle à la résistance ;
un lisseur de CC (103) comprenant un condensateur de lissage connecté à l'autre extrémité de la résistance ; et
un contrôleur qui commande le circuit de prévention de démarrage (104),
**caractérisé en ce que**,
sur la base d'une information de tension d'une alimentation de puissance (109) qui fait fonctionner le relais et sur la base d'une information de tension du condensateur de lissage, le contrôleur décide si une tension de contact ou une tension de maintien qui est inférieure à la tension de contact est appliquée au relais.

2. Dispositif de conversion de puissance (100) selon la revendication 1, dans lequel le contrôleur comprend
une section de détermination d'état d'alimentation de puissance de relais (111) qui détermine, à partir de l'information de tension de l'alimentation de puissance (109) qui fait fonctionner le relais, si un état de l'alimentation de puissance est un état normal ou un état anormal,
une section de détermination d'état de tension de condensateur de lissage (108) qui détermine, à partir de l'information de tension du condensateur de lissage, si le condensateur de lissage est ou n'est pas dans un état de charge terminé, et
un contrôleur d'excitation de relais (112) qui décide, sur la base d'un résultat de détermination de la section de détermination d'état d'alimentation de puissance de relais (111) et d'un résultat de détermination de la section de détermination d'état de tension de condensateur de lissage (108), si la tension de contact ou la tension de maintien est appliquée au relais.

3. Dispositif de conversion de puissance (100) selon la revendication 2, dans lequel, quand il est déterminé que l'état de la tension d'alimentation est l'état normal, et quand il est déterminé que le condensateur de lissage est dans l'état de charge terminé, le contrôleur d'excitation de relais (112) applique la tension de contact au relais et puis fait passer la tension vers la tension de maintien, et
ensuite, après qu'il est déterminé si l'état de l'alimentation de tension est l'état anormal, quand l'état de l'alimentation de puissance passe vers l'état normal, le contrôleur d'excitation de relais (112) applique la tension de contact au relais.

4. Dispositif de conversion de puissance selon la revendication 2,
dans lequel, quand il est déterminé que l'état de l'alimentation de puissance est l'état normal, et quand il est déterminé que le condensateur de lissage est dans l'état de charge terminé, le contrôleur d'excitation de relais (112) applique la tension de contact au relais et puis fait passer la tension vers la tension de maintien, et
ensuite, après qu'il est déterminé que le condensateur de lissage n'est pas dans l'état de charge terminé, quand le condensateur de lissage passe à l'état de charge terminé, le contrôleur d'excitation de relais (112) applique la tension de contact au relais.
